# EUROPÄISCHE PATENTSCHRIFT

(11) **EP 1 116 655 B1**
(45) Veröffentlichungstag und Bekanntmachung des Hinweises auf die Patenterteilung: **07.09.2005**
(21) Anmeldenummer: 00128465.2
(22) Anmeldetag: 23.12.2000
(51) Int. Cl.: B64D 13/02

(54) **Luftmassenstromregelsystem mit Druckhöhenkorrektur für ein Verkehrsflugzeug**
Air mass flow control system with pressure altitude correction for a passenger aircrat
Système de contrôle d'un courant de masse d'air avec correction pour l'altitude barométrique pour un avion de transport

(30) Priorität: 11.01.2000 DE 10000669
(43) Veröffentlichungstag der Anmeldung: 18.07.2001
(73) Patentinhaber: Airbus Deutschland GmbH, 21129 Hamburg (DE)
(72) Erfinder: Buchholz, Uwe Albert, Dipl.-Ing., 21640 Bliedersdorf (DE)
(74) Vertreter: Hansmann, Dierk

(56) Entgegenhaltungen:
- DE-A- 4 316 886
- DE-C- 19 707 858
- US-A- 5 273 486

## Beschreibung

Die Erfindung bezieht sich auf ein Luftmassenstromregelsystem mit Druckhöhenkorrektur für ein Verkehrsflugzeug gemäß dem Oberbegriff des Anspruchs 1. Mit ihr wird der Luftmassenstrom, der durch das Luftverteilernetz strömt, flugdruckhöhenvariant angepaßt geregelt.

In einem Verkehrsflugzeug werden Flugzeugkabinen als Passagier- und Frachträume ausgestaltet, die über einen Luftauslaß zonal belüftet werden. Dabei besteht das Bedürfnis, daß mit der Veränderung der Flughöhe und der mit ihr korrelierenden Änderung des Umgebungs-Luftdruckes und der -Lufttemperatur (inner- oder außerhalb des Flugzeugrumpfes) der aktuelle Luftmassenstromfluß durch das flugzeuginterne Luftverteilernetz bis an die (verzweigten) Abgabestelle(n) dermaßen beeinflußt wird, daß eine (auf das Luftverteilernetz bezogene) vordefinierte Luftmassenstrombilanz des Luftverteilersystems ausgeglichen wird.

In Luftverteilungsnetzen (eines Flugzeuges), die durch Turbomaschinen (Triebwerke oder Lüfter) mit Luft (oder anderen Gasen) versorgt werden, besteht oft die Notwendigkeit, die zu den angeschlossenen Luft-Verbrauchern (Air User) oder (nur) Luftauslässen (Outlets) transportierten Luft- oder (sonstigen) Gasströme variabel zu verteilen. Hierzu wird (bekanntermaßen) die Druckverlustcharakteristik der Luft-Steuereinheiten, wofür man variable Blenden, Ventile oder anderer querschnittsverändemder Strömungskörper verwendet, ausgenutzt, um eine Steuerung dieser Luft- oder Gasströme umzusetzen. Diese Luft-Steuereinheiten werden mit einer Meßsensorik oder mit einer (pneumatisch oder elektrisch) digitalen Regeleinheit oder mit implementierten Regelalgorithmen derweise verstellt, daß die Luftströme den angewendeten Regelalgorithmen folgend den Luft-Verbrauchern oder Luftauslässen zugeleitet wird. Dabei sind den Regelalgorithmen vordefinierte Sollgrößen, beispielsweise des Druckes oder der Temperatur, eines durch das Leitungsnetz transportierten Luftmassenstromes (oder Volumenstromes der Luft) bekannt. Die Regelgesetze, nach denen die Luftverteilung geschieht, werden variabel oder als Zwei-Punkte-Luftregelung ausgelegt. Hierzu wird auf eine Trimmluft-Druckregelung in der Trimmluft-Sammelleitung bekannter Airbus-Produkte (A300, A310, A319, A320, A321, A330, A340) sowie auf eine Luftverteilung des Airbus A300F4-600R mit der Luftmengen-steuerung über ein Bypass-Ventil verwiesen.

Als wesentlich komplexer wird von der Fachwelt die Luftverteilung (in einem Flugzeugrumpf) innerhalb von Luftverteilsystemen, bei denen mehrere angeschlossene Luftverbraucher (Luftkonsumenten) oder Luftauslässe gleichen oder unterschiedlichen Luftverteilungsgesetzen folgen sollen oder die (über Rohrleitungen) verteilte Gesamtluftmenge gleichmäßig erhöht oder verringert werden soll, angesehen. In (vielfältigen) Lösungsansätzen wurde konzeptionell eine Umsetzung dieser Anforderung(en) untersucht, bei einer gemeinsamen Luftsammelleitung, der mehrere Luftverbraucher oder Luftauslässe abzweigen, die Luftverteilung über einzeln zugeordnete Steuerorgane zu regeln und /oder die Gesamtluftmenge über gesteuerte Zulufteinheiten (geregelte Turbomaschinen) zu variieren.

Zur einfachen Luftregelung wird hierzu auf Sammelleitungs-Strömungsgrößen referenziert, wobei nach diesen Lösungen unvermeidbare Massenstromabweichungen auftreten werden, die dem Regelprozeß weder sensorisch noch anderweitig informativ zugänglich sind, weshalb somit (aufgrund ermangelndem Informationsdefizit) eine entsprechende Luftverteilungskorrektur unbeachtet bleibt. Auf eine flughöhenvariante Anpassung des durch das Luftverteilernetz strömenden Luftmassenstromes wird nicht eingegangen.

Es ist kein Regelprozeß bekannt geworden, der (auch) nur (andeutungsweise) ein Luftmassenstromregelsystem mit (angepaßter) "Altitude Correction" vorschlägt oder eine Lösung dafür bereithält.

Bekannt ist dem Fachmann lediglich eine druckgesteuerte Ansteuerung von Turbomaschinen mit fester Luftversorgungsmenge (die G&T Fan-Ansteuerung) auf dem Airbus A310. Ferner ist aus der EP 0 926 579 A1 eine Regelung von Stelleinheiten bekannt, die in Abhängigkeit vom statischen Druck in der Hauptsammelluftleitung vorgenommen wird. Diese allgemeine Lösung für ein variables Luftvolumenregelsystem läßt außer acht, daß eine Luftregelung in Flugzeugen mit einem variablen Gesamtdruck einhergeht, welcher die Druckverlustcharakteristik von Luftverteilkomponenten, Luftverteilungsnetzen und Turbomaschinen wesentlich beeinflußt. Darüber hinaus ist ein Luftmassenstromregelsystem mit Druckhöhenkorrektur gemäß dem Oberbegriff des Anspruchs 1 aus DE 197 07858 C1 bekannt.

Demzufolge liegt der Erfindung die Aufgabe zugrunde, ein Luftmassenstromregelsystem mit Druckhöhenkorrektur für ein Verkehrsflugzeug vorzuschlagen, mit der der Luftmassenstrom, der durch das Luftverteilernetz bis an die im Flugzeugrumpf installierten Luftverbraucher und / oder Luftauslässe geführt wird, flugdruckhöhenvariant (flugdruckhöhenveränderlich) angepaßt geregelt wird.

Diese Aufgabe wird durch die im Anspruch 1 angegebenen Maßnahmen gelöst. In den weiteren Unteransprüchen sind zweckmäßige Ausgestaltungen dieser Maßnahmen angegeben.

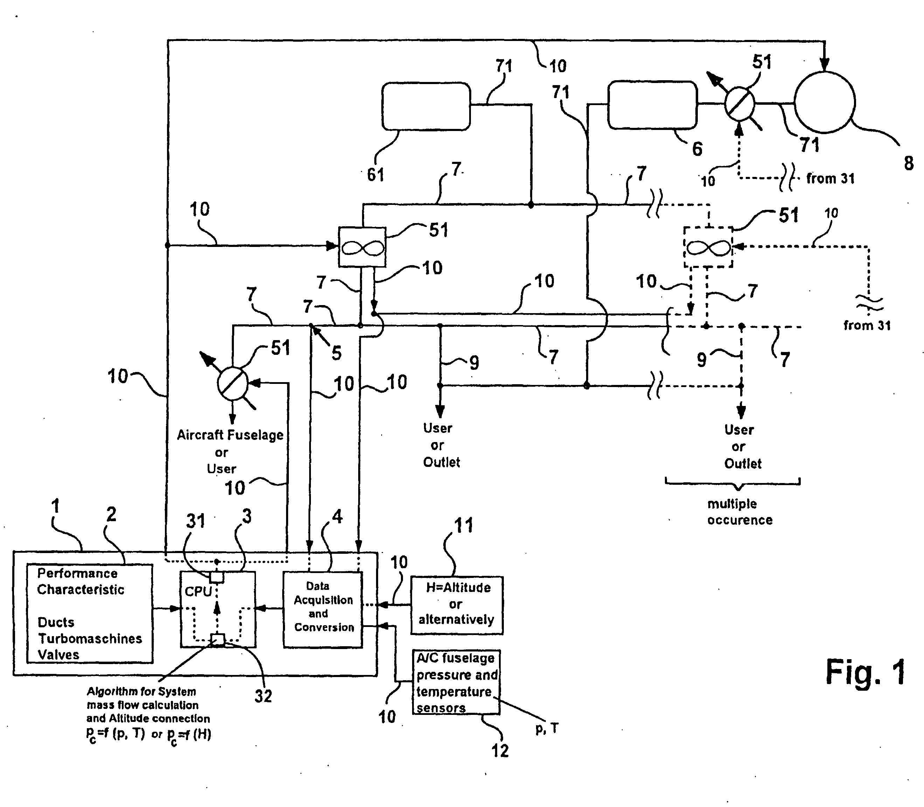

Die Erfindung ist in einem Ausführungsbeispiel anhand der beigefügten Zeichnung näher beschrieben. Dazu zeigt die
Fig. 1 ein Blockschaltbild des Luftmassenstromregelsystems mit Druckhöhenkorrektur für ein Verkehrsflugzeug.

Das in der Fig. 1 dargestellte Blockschaltbild bezieht sich auf den Anwendungsfall des Luftmassenstromregelsystems mit Druckhöhenkorrektur für ein Passagierflugzeug.

Anknüpfend an die verbal vorgestellten Lösungsansätze für eine Luftstromverteilung in Luftverteilsystemen mit mehreren von einer gemeinsamen Sammelluftleitung lokal (zonal) abgezweigten Luft-verbrauchern bzw. auch denkbaren Anschlüssen für Luftverbraucher und / oder Luftauslässen innerhalb des Flugzeug(druck)rumpfes (bspw. einer Flugzeugkabine), die im Einleitungsteil erwähnt werden, wird klar, daß bei einem auf Sammelluftleitungs-Strömungsgrößen referenzierenden Regelprozeß, der Luftmassenstromabweichungen infolge unterschiedlich durchflogener Flughöhen eines Flugzeuges (also auch während des Steig- oder Sinkfluges) druckhöhenangepaßt korrigieren soll, diesem die (in Korrelation stehenden) aktuellen Meßwerte (Bezugsgrößen) der Flughöhenveränderung oder der Umgebungsluftdruckänderung einhergehend mit der Sammelleitungs-Lufttemperatur zugänglich gemacht werden müssen, um eine dem Regelprozeß bekannte Druckverlustcharakteristik oder ihm bekannte Druckverlustcharakteristiken oder Kennlinien (-werte) der (lufteinspeisenden) Turbomaschinen korrigieren zu können. Auf dieser Grundlage werden die Vorraussetzungen geschaffen, daß der Regelprozeß den durch die Zuluftleitungen 71, die dem Luftverteilersystem 6 respektive der (den) Turbomaschine(n) 8 verbunden ist (sind), oder den durch die Sammelluftleitung(en) 7 strömenden aktuellen Massenluftstrom(fluß) mit einem vordefinierten Massenluftstrom(fluß), dessen Basisgrößen von einer Regeleinheit 1 erfaßt sind, vergleichen wird. Worauf später näher eingegangen wird, ist die Tatsache, daß bei bestehenden Abweichungen der miteinanderverglichenen Massenluftströme daraus durch die Regeleinheit 1 entsprechende Korrekturinformationen um- und (danach) abgesetzt werden, die den angeschlossenen Stelleinheiten (als Ventil oder Gebläse eingesetzten Zuluft-Steuereinheiten 51) oder dem Regelteil der Turbomaschine(n) 8 über Informationsleitungen 10 übermittelt werden bzw. diese entsprechend ansteuern, woraufhin der aktuelle Massenluftstromfluß mit dem definierten Massenstromfluß in Übereinstimmung gebracht wird. Mit diesem Regelprozeß wird erreicht, daß eine "Altitude Correction" - also eine (iterativ) angepaßte Druckhöhenkorrektur des durch die Rohrleitungverbindungen fließenden Massenluftstromes - umgesetzt wird, den bekannte Luftmassenstromregelungen vermissen lassen.

Mit einem Blick auf die Fig. 1 kann man den Schaltungsaufbau des Luftmassenstromregelsystems (nachfolgend "LMR" bezeichnet) erkennen, worauf nunmehr näher eingegangen wird. Der Hauptteil dieses LMR wird mit der erwähnten Regeleinheit 1 bereitgestellt. Diese Regeleinheit 1 besteht aus einer Kennfeld-Speicher-Einrichtung 2 ("Performance Characteristic"-Speicher-Einrichtung), einer Zentralprozessoreinheit 3 (nachfolgend "CPU" genannt), der eine Vergleichseinrichtung 31 und ein Rechenwerk 32 integriert ist, und einer Zustands-Erfassungseinrichtung 4 ("Data Acquisition"-Erfassungseinrichtung).

Dabei ist die Vergleichseinrichtung 31 mit dem Rechenwerk 32, dem die Kennfeld-Speicher-Einrichtung 2 und die Zustands-Erfassungseinrichtung 4 angeschlossen sind, informationstechnisch verbunden, wobei der Informationsaustausch über intern (der Regeleinheit 1) geführte Datenleitungen umgesetzt wird. Auf dem Speicher der Kennfeld-Speicher-Einrichtung 2 sind charakteristische Daten, die das Betriebsverhalten (die Kennlinien und Kennlinienfelder) der einzelnen Luftverbindungsleitungen, der Turbomaschine(n) 8 und der verschiedenen Zuluft-Steuereinheiten 51 (Ventile, Gebläse) kennzeichnen, (für die Vergleichseinrichtung 31 und das Rechenwerk 32) abrufbar abgelegt. Außerdem ist die Zustands-Erfassungseinrichtung 4 über Signalleitungen 10 mit verschiedenen (eine Überwachungsfunktion ausübenden) Einheiten bzw. Einrichtungen, (also genauer) mit an unterschiedlicher Stelle (im Innenbereich des Flugzeugrumpfes) installierten internen Überwachungseinheiten 5 [Temperatur-/Druck-/Strömungs-Sensoren] und mit einer Überwachungseinrichtung 11 [Flight-Data-Management: als Bestandteil des Flight Management Systems des Verkehrsflugzeuges] und mit einer (am Außenbereich des Flugzeugrumpfes installierten) externen Überwachungseinheit 12 (Druck- und Temperatursensorik), verbunden. Außerdem wird ergänzt, daß dem erwähnten Rechenwerk 32 ein Berechnungsatgorithmus zur Berechnung des Systemmassenstromes (von Luft) und der Höhenkorrektur integriert ist, worauf später noch eingegangen wird. Diese Regeleinheit 1 ist ein wichtiger Bestandteil dieses LMR mit Druckhöhenkorrektur für ein Flugzeug, bei dem ferner eine Sammelluftleitung 7 und eine (ihr angeschlossene) Zuluftleitung 71, die durch Klimapacks mit konditionierter Luft versorgt werden, mit einem Luftverteilersystems 6 verbunden ist. Letzteres wird durch eine oder mehrere Turbomaschinen 8 (bspw. von luftatmenden Triebwerken) mit frischer (angesaugter Außen-) Luft versorgt. Der Sammelluftleitung 7 ist mindestens eine Einzelluftleitung 9 abgezweigt, der wenigstens ein Luft-Verbraucher (Air User) oder ein Luftauslaß (Air Outlet), deren Luftzufuhr von verschiedenen (den Luftverbindungen zwischengeschalteten) Zuluft-Steuereinheiten 51) [genauer: von drehzahlgeregelten Luftgebläsen oder Luftstrom-Regelventilen] mengenmäßig variiert wird. Diese Zuluft-Steuereinheiten 51 sind über Informationsleitungen 10 (Datenleitungen) mit der Regeleinheit 1 verbunden, um die von letzterer auf dem Informationsweg verschickten Daten (signalumgesetzte Stellbefehle oder Regelkommandos) aufzunehmen und umzusetzen, daraufhin durch die betreffende Zuluft-Steuereinheit 51 eine druckhöhenkorrigierte Erhöhung oder Senkung des Luftmassenstromes durch die nachgeschalteten Luftleitungen veranlaßt wird.

An dieser Stelle wird hervorgehoben, daß die druckhöhenangepaßte Korrektur des zu regelnden Luftmassenstromes auf der Basis eines Berechnungsprozesses und eines Soll-/Ist-Vergleiches von Daten, die entweder die Flughöhe oder andererseits den Luftdruck und die Temperatur inner- und außerhalb des Flugzeugrumpfes betreffen, geschehen wird. Deshalb ist vorgesehen, daß der Zustands-Erfassungseinrichtung 4 die von der (den rumpfinternen oder -externen) Überwachungseinheit(en) 5, 12 oder der Überwachungseinrichtung 11 lokal erfaßten aktuellen Meßwerte als Dateninformation über eine Informationsleitung 10 (Datenleitung) bereitgestellt werden.

Um den Blick für das weitere Verständnis des LMR nicht zu verlieren, wird auf die Leitungsarchitektur noch näher eingegangen. Wie in Fig. 1 vereinfacht dargestellt, wird vorgesehen, daß einer Sammelluftleitung 7 wenigstens eine Einzelluftleitung 9 zur Versorgung eines Luftverbrauchers (User) oder zur Beblasung eines (bspw.) Kabinenraumes über einen Luftauslaß mit (konditionierter) Luft abgezweigt ist, wobei durchaus weitere Einzelluftleitungen 9 der Sammelluftleitung 7 angeschlossen sind (gestrichelte Darstellung), über die andere Luftverbraucher (User) oder Luftauslässe (Outlets) mit konditionierter Luft versorgt werden. Den Einzelluftleitungen 9 ist ein Luftverteilersystem 6 mit einer Luftversorgung von konditionierter Luft über Turbomaschinen 8 zugeschaltet, welches die Versorgung der Verbraucher mit konditionierter Luft sicherstellt.

Wenigstens eine Zuluft-Steuereinheit 51, die an eine mit einem Umluftverteilungssystem 61 des Verkehrsflugzeuges verbundenen Zuluftleitung 71 angeschlossen ist, über die der Transport der Umluft erfolgt, ist auf diese Sammelluftleitung 7 geschalten. Die (in horizontaler Ebene fortgesetzte) Luftleitungsführung dieser Sammelluftleitung 7 führt über eine weitere Zuluft-Steuereinheit 51 zu einem weiteren Luftverbraucher, der (möglicherweise) innerhalb einem anderen Kabinenraum (bspw. eines Passagier- oder Frachtraum) stationiert ist und auch konditionierte Luft bezieht. Dabei werden diese Zuluft-Steuereinheiten 51 mit drehzahlgeregelten Luftgebläsen, die rumpfinterne / -externe Überwachungseinheit 5 jeweils mit einem Temperatur- und einem Druck- und (ggf.) einem Strömungssensor oder einer (möglicherweise umsetzbaren) Sensoren-Kombination der genannten Sensoren in einer Sensoreneinheit, die Sammelluftleitung 7 als auch die Zuluftleitung 71 und die Einzelluftleitung 9 mit Rohrleitungen, die Informationsleitungen 10 mit elektrischen Signalübertragungsleitungen oder (denkbar auch mit) Lichtwellenleitern ausgeführt, wobei die Überwachungseinrichtung 11 sich auf eine Flight Data Management Unit (nachfolgend "FDMU" genannt), die Bestandteil des flugzeug-internen "Flight Management Systems" ist, bezieht.

Die Sensoren der rumpfintern installierten Überwachungseinheit 5 sind (nach dem Beispiel der Fig. 1) an (für den Regelprozeß) geeigneter Zustandserfassungsstelle (Meßstelle) innerhalb dem Leitungsquerschnitt der betreffenden Luftleitung (Rohrleitung) positioniert. Dabei wird nicht ausgeschlossen, daß - auf die Erfassung des Luftdruckes und der Lufttemperatur im Kabinenraum (im Flugzeugrumpf) oder außerhalb des Flugzeugrumpfes beschränkt - ein betreffender Druck- und Temperatursensor (bzw. die kombinierte Sensoreneinheit) sowohl nahegelegen den Luftverbindungsleitungen oder- auf die erwähnte rumpfextem angeordnete Überwachungseinheit 12 abzielend - auch am Flugzeugrumpf-Außenbereich installiert wird. Die Informationsleitungen 10 verbinden den Regelbereich des Gebläses und des Regelventils mit der Regeleinheit 1. Dabei ist der Regelbereich des betreffenden Gebläses einmal mit der Zustands-Erfassungseinrichtung 4 und weiter mit der Vergleichseinrichtung 31 verbunden. Die den (der) Sensoren(einheit) verbundene Informationsleitung 10 und auch die mit der FDMU verbundene Informationsleitung 10 sind der Zustands-Erfassungseinrichtung 4 angeschlossen.

Es wird deshalb vorgesehen, daß die (betreffenden Sensoren) der internen Überwachungseinheit 5 der Zustands-Erfassungseinrichtung 4 den aktuellen Zustand bezüglich des Druckes und der Temperatur der durch die Rohrleitungen strömenden Luft übermitteln. Die aktuellen Daten bezüglich der Flughöhe des Flugzeuges werden der Zustands-Erfassungseinrichtung 4 kontinuierlich von der Überwachungseinrichtung 11 (von der FDMU) übermittelt.

Das in der CPU 3 integrierte Rechenwerk 32 wird mit der Kennfeld-Speicher-Einrichtung 2 und der Zustands-Erfassungseinrichtung 4 in ständiger Datenverbindung stehen. Dabei wird der Berechnungsalgorithmus des Rechenwerkes 32 über die bezogenen Daten (transferierten Informationen) von der Kennfeld-Speicher-Einrichtung 2 und von der Zustands-Erfassungseinrichtung 4 die momentane Luftmassenbilanz des aus den luftleitungsverknüpften Elementen: "Umluftverteilungssystems 61, Zuluftleitung 71, Luftverteilersystem 6, Turbomaschine(n) 8, Sammelluftleitung(en) 7, Einzelluftleitung(en) 9, Zuluft-Steuereinheit(en) 51" (gebildeten) angeschlossenen Luftsystems berechnen und die erhaltene Höheninformation dazu verwenden, die im Kennfeldspeicher (der Kennfeld-Speicher-Einrichtung 2) enthaltenen Daten höhenvariant zu korrigieren, um die berechnete Luftmassenbilanz der Vergleichseinrichtung 31 als Soll-Daten bereitzustellen (und - nach Ermittlung - sofort oder auf Abruf zu übermitteln).

Außerdem ist die Vergleichseinrichtung 31, die einen permanenten Datenaustausch mit den ihr verbundenen Einrichtungen (Kennfeld-Speicher-Einrichtung 2, Zustands-Erfassungseinrichtung 4) umsetzt, eben dazu geeignet, einen Datenvergleich der von der Zustands-Erfassungseinrichtung 4 verfügbaren Zustandsdaten mit den vom Berechnungsalgorithmus des Rechenwerkes 32 berechneten Daten durchzuführen. Eine ermittelte (festgestellte) Abweichung der von ihr verglichenen Daten [der betreffenden Zustandsdaten (Ist-Daten) von den Berechnungsdaten (Soll-Daten)] wird daraufhin (sofort) über die angeschlossenen Informationsleitungen 10 den betreffenden Zuluft-Steuereinheiten 51 mittels entsprechender abgesetzter Steuersignale übermittelt. Das entsprechende Steuersignal veranlaßt daraufhin die betreffende Zuluft-Steuereinheit 51 dazu, den sensitiv überwachten (aktuellen) Luftmassenstrom (durch die Luftleitungen) auf einen (mit den berechneten Betriebszustands-Daten korrelierenden) druckhöhenangepaßten Luftmassenstrom einzuregeln. Die mit einem Luftmassen-strom-Regelventil ausgeführte Zuluft-Steuereinheit 51 wird - nach geschehener Ansteuerung - daraufhin den anstehenden Luftmassenstrom entsprechend drosseln oder weiter freigeben. Außerdem wird die als Luftgebläse ausgeführte Zuluft-Steuereinheit 51 den Luftmengendurchsatz der gebläseangesaugten Luft nach geschehener Ansteuerung entsprechend erhöhen oder vermindern.

Aus Gründen der Datenversorgungs-Zuverlässigkeit, die möglichen Crash-Situationen - auch im Zusammenhang mit einem sparsamen Umgang von (im Notfall) nur spärlich vorhandenen Luft-Energieressorcen- vorbeugt, wird auch ein Soll-/Vergleich der Luftdruck- und Lufttemperaturwerte erwogen, die auf einer mit der Flugzeughöheninformation korrelierenden Flugzeugdruck- und Flugzeugtemperaturinformation mit darauffolgender CPU-integrierter Berechnung der gewünschten Prozeßdruckkorrektur (auf dem Fundament der mit den sensorisch erfaßten Zustandsdaten verglichenen Speicherdaten) basiert. Je nach Auslegung der (drei Einheiten der) Regeleinheit 1 kann man zwischen den aufgeführten Möglichkeiten wählen oder beide gleichermaßen anwenden.

Die weiteren Erläuterungen beziehen sich auf zweckmäßige Ausgestaltungen der vorgestellten Maßnahmen.

Danach sind im Speicher der Kennfeld-Speicher-Einrichtung 2 die Daten der Druckverlustkennlinien von Luftverteitungs-Systemkomponenten und -Stelleinheiten, die Daten der Betriebsverhalten-Kennlinien von Turbomaschinen, Luft(vertbindungs)leitungen (Rohrleitungen) und / oder Luftkanälen und sonstiger Zuluft-Steuereinheiten, die Daten der Kennlinie des statischen Luftdruckes der Sammelluftleitung 7 gespeichert. Dabei sind die auf das Betriebsverhalten bezogenen charakteristischen Daten auf Kennlinien und Kennlinienfelder bezogen sind, die für das (CPUintegrierte) Rechenwerk 32 (respektive den Berechnungsalgorithmus) stets auf Abruf verfügbar sind.

Die erwähnte Zustands-Erfassungseinrichtung 4 ist zur Erfassung der Zustandsinformationen, zur Aufbereitung dieser Zustandsinformationen und deren datenmäßigen Umsetzung und zur Weiterleitung der datengewandelten Zustandsinformationen geeignet.

Diese Zustandsinformationen (aktuelle Zustandsdaten) beziehen sich - wie vorher angedeutet - vordergründig auf die Flughöhe, die auf den rumpfunter- und / oder - oberseitigen Rumpfaußenbereich des Flugzeugrumpfes und / oder auf die Rumpflängsachse des Flugzeugrumpfes bezogen ist.

Anderenfalls sind die Zustandsinformationen (aus vorher genannten Erwägungen) wenigstens auf den Leitungsinnenluftdruck und / oder den Umgebungsluftdruck der Sammelluftleitung 7 sowie (ggf.) der Einzelluftleitung 9 und außerdem auf die Lufttemperatur innerhalb und / nahe gelegen der betreffenden Leitung bezogen. Zudem kann aus Gründen vorgesehen werden, daß der Zustands-Erfassungseinrichtung 4 auch Zustandsinformationen, die den Rumpfinnenluftdruck (Kabinenluftdruck im Kabinenraum) und / oder den Rumpfaußenluftdruck (Umgebungsluftdruck des Flugzeugrumpfes) und die Rumpfinnenlufttemperatur (Kabinenlufttemperatur im Kabinenraum) und / oder den Luftmengendurchsatz der durch die Sammelleitung 7 und / oder der Einzelluftleitung 9 strömenden Luft und / oder der Rumpfaußenlufttemperatur, zugeführt werden.

Die Zustands-Erfassungseinrichtung 4 ist deshalb vordergründig mit dem Flight-Data-Management (als Bestandteil des Flight Management System) des Flugzeuges verbunden ist, von dem die permanent festgestellten Flughöhendaten der Zustands-Erfassungseinrichtung (4) zugeleitet werden.

Anderenfalls sind der Zustands-Erfassungseinrichtung (4) mehreren Sensoren angeschlossen ist, von denen der einzelne Sensor entweder als Druck- oder Temperatur- oder Strömungssensor ausgebildet ist, wobei ein einzelner innerhalb oder außerhalb der Sammelleitung 7 oder der Einzelluftleitung 9 oder außerhalb des Flugzeugrumpfes installierter Sensor dazu befähigt ist, den aktuellen Zustand des Luftdruckes, der Lufttemperatur und des Luftmengendurchsatzes meßtechnisch komplex zu erfassen.

Deshalb ist - zur Erfassung der auf den Luftdruck und die Lufttemperatur und den Luftmengendurchsatz bezogenen aktuellen Zustandsinformationen - die Zustands-Erfassungseinrichtung 4 mit verschiedenen Sensoren (also wenigstens- mit einem Druck- und einem Temperatur- und / oder einem Strömungssensor) verbunden. Dabei ist jeweils wenigstens ein Sensor innerhalb dem Leitungsquerschnitt der Sammelluftleitung 7 und / oder der Einzelluftleitung 9 angeordnet ist, mit dem innerhalb dem Leitungsquerschnitt der Leitungsinnenluftdruck und / oder die Lufttemperatur der Luftströmung und / oder der Luftmengendurchsatz sensitiv erfaßt wird und nach Umsetzung in eine dem erfaßten Zustand entsprechende Information datengewandelt der Zustands-Erfassungseinrichtung 4 zugeleitet wird.

Anderenfalls ist die Zustands-Erfassungseinrichtung 4 mit mehreren außerhalb und nahe der Sammelluftleitung 7 oder der Einzelluftleitung 9 gelegenen Sensoren verbunden ist, mit denen der Rumpfinnenluftdruck und / oder die Rumpfinnenlufttemperatur und / oder Luftmengendurchsatz der innerhalb dem Flugzeugrumpf sich bewegenden Luft (Rumpfinnenluft) sensitiv erfaßt wird und nach Umsetzung in eine dem erfaßten Zustand entsprechende Information datengewandelt der Zustands-Erfassungseinrichtung 4 zugeleitet wird.

Ferner kann die Zustands-Erfassungseinrichtung 4 mit mehreren außerhalb am Flugzeugrumpf gelegenen Sensoren verbunden sein, mit denen der Rumpfaußenluftdruck und / oder die Rumpfaußentemperatur und der Luftmassendurchsatz der rumpfabwärts strömenden Außenluft (Rumpfaußenluft) sensitiv erfaßt wird und nach Umsetzung in eine dem erfaßten Zustand entsprechende Information datengewandelt der Zustands-Erfassungseinrichtung 4 zugeleitet wird.

Die vorgestellte Lösung bezieht sich demnach auf einen Regelprozeß, der- mit den ihm bekannten Druckverlustkennlinien von Luftverteilungs-Netzkomponenten und -Stelleinheiten, Kennlinien von Turbomaschinen, einem statischen Druck einer Luftverteilungs-Netzsammelleitung sowie der informativen Zuleitung einer Flughöhendruckkorrektur, die aus einer Flughöheninformation oder einer Druck- / Temperaturinformation der Luft(strömung) mit im Prozeß integrierter Berechnung der Prozeßkorrektur bestehen kann, - einen oder mehrere Luftmassenströme oder einen Gesamtluftmassenstrom berechnet, diese(n) mit einer vorgegebenen Luftmassenbilanz vergleicht und bei Abweichungen entsprechende Signale an in das Luftverteilungsnetz integrierte Stelleinheiten oder geregelte Turbomaschinen weiterleitet, die den Luftmassenstrom solange verändern, bis die vorgegebene Luftmassenstrombilanz ausgeglichen ist. Dieser Regelprozeß ist ein zeitlich dauerhafter fortschreitender Prozeß. Sofern man weiß, daß das vorgestellte LMR die variabel transportierten Luftmengen flughöhenvariant angepaßt bis an die Luftverbraucher oder Luftauslässe bereitstellt, soll heißen, genau auf den (mittels der Regeleinrichtung 1) abgestimmten Luftmengenbedarf druckhöhenkorrigiert bereitstellt, wird der Fachmann konstatieren, daß mit diesem LMR soweit alle bisher vernachlässigten Störungsgrößen (Meßfehler, Ungenauigkeiten oder unterbliebene Erfassung), die einem LMR bei druckgesteuerter Ansteuerung der Turbomaschinen fester Luftversorgungsmenge infolge fehlender oder nicht ausreichender Erfassung, Bewertung und / oder ungenügender Verarbeitung anhaften, abgestellt werden. Die individuelle Bereitstellung von zu wenig oder zu viel Luft bis an den einzelnen Luftverbraucher oder Luftauslaß wird - infolge der flugdruckhöhenvariant angepaßten Beeinflußung des Transportes von Luftmengen - ausbleiben, weil zum richtigen Zeitpunkt und in Korrelation der aktuellen Flughöhe während des Fluges des Verkehrsflugzeuges der Luftbedarf aktuell abgestimmt wird. Eine nicht unbedeutende Maßnahme, der bei der Flugzulassung eines Verkehrsflugzeuges genügende Beachtung geschenkt wird, außerdem der spätere Betreiber (die Airliner) einen verbesserten Komfort bei der Belüftung der Kabinenbereiche feststellen wird.

## Patentansprüche

1. Luftmassenstromregelsystem mit Druckhöhenkorrektur für ein Verkehrsflugzeug, bei dem von einer durch eine Klimaanlage mit konditionierter Luft gespeisten Zuluftleitung (71) eines Luftverteilersystems (6), das durch Turbomaschinen (8) mit Luft versorgt wird, mindestens eine Einzelluftleitung (9), die der Zuluftleitung (71) und außerdem einer Sammelluftleitung (7) angeschlossen ist, mindestens ein Luft-Verbraucher oder ein Luftauslaß, dessen Luftzufuhr von verschiedenen Zuluft-Steuereinheiten (51) mengenmäßig variiert wird, abgezweigt ist, und die Zuluft-Steuereinheiten (51) über Informationsleitungen (10) mit einer Regeleinheit (1) verbunden sind,
**dadurch gekennzeichnet, daß** die Regeleinheit (1) mit einer Kennfeld-Speicher-Einrichtung (2), einer CPU-integrierten Vergleichseinrichtung (31), einem mit letzterer kommunizierenden und einen Berechnungsalgorithmus aufweisenden CPU-integrierten Rechenwerk (32), und einer Zustands-Erfassungseinrichtung (4) ausgestattet ist, wobei das Rechenwerk (32) über interne Datenleitungen mit der Kennfeld-Speicher-Einrichtung (2), mit der Zustands-Erfassungseinrichtung (4) und mit der Vergleichseinrichtung (31) informationstechnisch verbunden ist, dabei auf einem Speicher der Kennfeld-Speicher-Einrichtung (2) entsprechende das Betriebsverhalten der Luftleitungen, der Turbomaschinen (8) und verschiedener Zuluft-Steuereinheiten (51) charakterisierende Daten abrufbar abgelegt sind und die Zustands-Erfassungseinrichtung (4) über Signalleitungen (10) mit verschiedenen Überwachungseinheiten (5, 12) oder-einrichtungen (11) verbunden ist, die ihr die erfaßten Meßwerte bezüglich der Flughöhe und bezüglich des Druckes und der Temperatur in und / oder außerhalb des Flugzeugrumpfes, und in der Sammelluftleitung (7) und /oder der Zuluftleitung(en) und / oder der Einzeuftleitung(en) (9) übermitteln, daß außerdem die Vergleichseinrichtung (31), die einen permanenten Datenaustausch mit den ihr verbundenen Einrichtungen umsetzt, eine Datenberechnung der von der Zustands-Erfassungseinrichtung (4) verfügbaren Zustandsdaten mit den vom Speicher der Kennfeld-Speicher-Einrichtung (2) abgerufenen Speicherdaten durch führt und anschließend einen Datenvergleich zwischen den berechneten Daten und den betreffenden Zustandsdaten durchführt, die bei ermittelter Abweichung der verglichenen Daten, also der Abweichung der betreffenden Zustandsdaten von den Speicherdaten, über die angeschlossenen Informationsleitungen (10) den betreffenden Zuluft-Steuereinheiten (51) entsprechende Steuersignale übermittelt, wobei das entsprechende Steuersignal die betreffende Zuluft-Steuereinheit (51) dazu veranlaßt, den sensitiv überwachten aktuellen Luftmassenstrom auf einen mit den gespeicherten Betriebszustands-Daten korrelierenden druckhöhenangepaßten Luftmassenstrom einzuregeln.

2. **Luftmassenstromregelsystem** nach Anspruch **1**, **dadurch gekennzeichnet, daß** im Speicher der Kennfeld-Speicher-Einrichtung (2) die Daten der Druckverlustkennlinien von Luftverteilungs-Systemkomponenten und -Stelleinheiten, die Daten der Betriebsverhalten-Kennlinien von Turbomaschinen, Luftleitungen (Rohrleitungen) und / oder Luftkanälen und sonstiger Zuluft-Steuereinheiten, die Daten der Kennlinie des statischen Luftdruckes der Sammelluftleitung (7) gespeichert sind.

3. Luftmassenstromregelsystem nach den Ansprüchen 1 und 2, **dadurch gekennzeichnet, daß** die auf das Betriebsverhalten bezogenen charakteristischen Daten auf Kennlinien und Kennlinienfelder bezogen sind, die für den Berechnungsalgorithmus des Rechenwerkes (32) auf Abruf verfügbar sind.

4. Luftmassenstromregelsystem nach Anspruch 1, **dadurch gekennzeichnet, daß** die Zustands-Erfassungseinrichtung (4) zur Erfassung der Zustandsinformationen, zur Aufbereitung dieser Zustandsinformationen und deren datenmäßigen Umsetzung und zur Weiterleitung der datengewandelten Zustandsinformationen geeignet ist.

5. Luftmassenstromregelsystem nach Anspruch 1, **dadurch gekennzeichnet, daß** die Zustandsinformationen wenigstens auf den Leitungsinnenluftdruck und / oder den Umgebungsluftdruck der Sammelluftleitung (7) und / oder der Zuluftleitung (71) und / oder der Einzelluftleitung (9) und den Rumpfinnenluftdruck und / oder den Rumpfaußenluftdruck und die Lufttemperatur und / oder der Luftmengendurchsatz der durch die Sammelleitung (7) und / oder der Zuluftleitung (71) und / oder der Einzelluftleitung (9) strömenden Luft und / oder die Rumpfinnenlufttemperatur und oder die Rumpfaußenlufttemperatur und die Flughöhe (Umgebungshöhe des Flugzeugrumpfes) des Flugzeuges bezogen sind.

6. Luftmassenstromregelsystem nach den Ansprüchen 1 und 4, **dadurch gekennzeichnet, daß** die Zustands-Erfassungseinrichtung (4) mit verschiedenen Sensoren verbunden ist, dabei jeweils wenigstens ein Sensor innerhalb dem Leitungsquerschnitt der Sammelluftleitung (7) und / oder der Zuluftleitung (71) und / oder der Einzelluftleitung (9) angeordnet ist, mit dem innerhalb dem Leitungsquerschnitt der Leitungsinnenluftdruckund / oder die Lufttemperatur der Luftströmung und / oder der Luftmengendurchsatz sensitiv erfaßt wird und nach Umsetzung in eine dem erfaßten Zustand entsprechende Information datengewandelt der Zustands-Erfassungseinrichtung (4) zugeleitet wird.

7. Luftmassenstromregelsystem nach den Ansprüchen 1 und 4, **dadurch gekennzeichnet, daß** die Zustands-Erfassungseinrichtung (4) mit mehreren außerhalb und nahe der Sammelluftleitung (7) oder der Zuluftleitung (71) und / oder der Einzelluftleitung (9) gelegenen Sensoren verbunden ist, mit denen der Rumpfinnenluftdruck und / oder die Rumpfinnenlufttemperatur und oder Luftmengendurchsatz der innerhalb dem Flugzeugrumpf sich bewegenden Luft sensitiv erfaßt wird und nach Umsetzung in eine dem erfaßten Zustand entsprechende Information datengewandelt der Zustands-Erfassungseinrichtung (4) zugeleitet wird.

8. Luftmassenstromregelsystem nach den Ansprüchen 1 und 4, **dadurch gekennzeichnet, daß** die Zustands-Erfassungseinrichtung (4) mit einer rumpfextern installierten Überwachungseinheit (12), die sich auf eine Druck- und Temperatursensorik bezieht, die mit mehreren außerhalb am Flugzeugrumpf gelegenen Sensoren umgesetzt ist, verbunden ist, mit der der Rumpfaußenluftdruck und / oder die Rumpfaußentemperatur und der Luftmassendurchsatz der rumpfabwärts strömenden Außenluft sensitiv erfaßt wird und nach Umsetzung in eine dem erfaßten Zustand entsprechende Information datengewandelt der Zustands-Erfassungseinrichtung (4) zugeleitet wird.

9. Luftmassenstromregelsystem nach den Ansprüchen 1 und 4, **dadurch gekennzeichnet, daß** die Zustands-Erfassungseinrichtung (4) mit dem Flight-Data-Management des Flugzeuges verbunden ist, von dem die permanent festgestellten Flughöhendaten der Zustands-Erfassungseinrichtung (4) zugeleitet werden.

10. Luftmassenstromregelsystem nach Anspruch 4 und einem der Ansprüche 6 bis 9,
**dadurch gekennzeichnet, daß** der Zustands-Erfassungseinrichtung (4) mehreren Sensoren angeschlossen ist, von denen der einzelne Serisor entweder als Druck- oder Temperatur- oder Strömungssensor ausgebildet ist, anderenfalls ein einzelner innerhalb oder außerhalb der Sammelleitung (7) oder der Einzelluftleitung (9) oder außerhalb des Flugzeugrumpfes installierter Sensor dazu befähigt ist, den aktuellen Zustand des Luftdruckes, der Lufttemperatur und des Luftmengendurchsatzes meßtechnisch komplex zu erfassen.

11. Luftmassenstromregelsystem nach Anspruch 1, **dadurch gekennzeichnet, daß** die Zuluft-Steuereinheiten (51) mit einem Luftmengen-Regelventil oder mit einem drehzahlregelbarem Gebläse realisiert ist.

12. Luftmassenstromregelsystem nach Anspruch 1, **dadurch gekennzeichnet, daß** die Überwachungseinheiten (5, 12) rumpfintern mit Temperatur- und / oder Druck- und / oder Strömungs-Sensoren und rumpfextern mit Temperatur- und Drucksensoren realisiert ist, und daß die Überwachungseinrichtung (11) auf eine "Flight Data Management Unit", die Bestandteil eines flugzeuginternen "Flight Management Systems" ist, bezogen ist.

13. Luftmassenstromregelsystem nach Anspruch 1, **dadurch gekennzeichnet, daß** dem Rechenwerk (32) ein Berechnungsalgorithmus integriert ist, der programmtechnisch und / oder vergleichstechnisch mit den Daten der Kennfeld-Speicher-Einrichtung (2) und der Zustands-Erfassungseinrichtung (4) einen Luftmassenstrom berechnet.

14. Luftmassenstromregelsystem nach Anspruch 1, **dadurch gekennzeichnet, daß** die Vergleichseinrichtung (31) befähigt ist, einen Soll-Ist-Datenvergleich der Zustandsdaten mit den Kennfelddaten durchzuführen.

15. Luftmassenstromregelsystem nach den Ansprüchen 1 und 14, **dadurch gekennzeichnet, daß** die Vergleichseinrichtung (31) befähigt ist, im Ergebnis des Soll-lst-Datenvergleiches an die ihr angeschlossenenen Zuluft-Steuereinheiten (51) entsprechende Stellgrößen zu senden.

## Claims

1. Air mass flow regulating system with pressure altitude correction for a passenger aircraft, in which system there is branched off from a supply air line (71) fed with conditioned air by an air-conditioning installation and belonging to an air distributor system (6) which is supplied with air by turbomachines (8), at least one individual air line (9) which is linked to the supply air line (71) and also to a collecting air line (7), at least one air-user, or an air outlet whose air infeed is varied, in terms of quantity, by various supply air control units (51), and said supply air control units (51) are connected to a regulating unit (1) via information lines (10), **characterised in that** the regulating unit (1) is equipped with a characteristic diagram memory device (2), a CPU-integrated comparison device (31), a CPU-integrated arithmetic element (32) communicating with the latter and having a calculating algorithm, and a condition-detecting device (4), the arithmetic element (32) being connected information technology-wise, via internal data lines, to the characteristic diagram memory device (2), to the condition-detecting device (4), and to the comparison device (31), under which circumstances corresponding data which characterise the operational behaviour of the air lines, of the turbomachines (8) and of various supply air control units (51) are deposited, so as to be capable of being called up, in a memory belonging to the characteristic diagram memory device (2) and the condition-detecting device (4) is connected, via signal lines (10), to various monitoring units (5, 12) or monitoring devices (11) which transmit to it the measurements detected as regards the flight altitude and as regards the pressure and temperature inside and/or outside the aircraft fuselage, and in the collecting air line (7) and/or the supply air line(s) and/or the individual air line(s) (9); that, moreover, the comparison device (31), which realises a permanent exchange of data with the devices connected to it, performs a data calculation of the condition data available from the condition-detecting device (4) with the memory data called up from the memory of the characteristic diagram memory device (2), and then performs a data comparison between the calculated data and the relevant condition data and, when the deviation of the compared data has been ascertained, that is to say the deviation of the relevant condition data from the memory data, transmits corresponding control signals to the relevant supply air control units (51) via the linked information lines (10), the corresponding control signal causing the relevant supply air control unit (51) to regulate the sensitively monitored current air mass flow to an air mass flow which correlates with the stored operational condition data and is adapted to the pressure altitude.

2. Air mass flow regulating system according to claim 1, **characterised in that** the data of the pressure-loss characteristics of air distribution system components and air distribution adjusting units, the data of the operational behaviour characteristics of turbomachines, air lines (pipelines) and/or air ducts and other supply air control units, and the data of the characteristic of the static air pressure of the collecting air line (7) are stored in the memory of the characteristic diagram memory device (2).

3. Air mass flow regulating system according to claims 1 and 2, **characterised in that** the characteristic data related to the operational behaviour are related to characteristics and characteristic diagrams which are available, on call-up, for the calculating algorithm of the arithmetic element (32).

4. Air mass flow regulating system according to claim 1, **characterised in that** the condition-detecting device (4) is suitable for detecting the condition information, for preparing the said condition information and its translation, in terms of data, and for passing on the data-converted condition information.

5. Air mass flow regulating system according to claim 1, **characterised in that** the condition information is related at least to the internal air pressure of the line and/or the environmental air pressure of the collecting air line (7) and/or of the supply air line (71) and/or of the individual air line (9), and to the internal air pressure of the fuselage and/or the external air pressure of the fuselage and the air temperature and/or the air quantity throughput of the air flowing through the collecting line (7) and/or the supply air line (71) and/or the individual air line (9), and/or to the internal air temperature of the fuselage and/or the external air temperature of the fuselage and the flight altitude (environmental height of the aircraft fuselage) of the aircraft.

6. Air mass flow regulating system according to claims 1 and 4, **characterised in that** the condition-detecting device (4) is connected to various sensors, under which circumstances at least one sensor, in each case, is arranged inside the line cross-section of the collecting air line (7) and/or of the supply air line (71) and/or of the individual air line (9), by means of which sensor the internal air pressure of the line and/or the air temperature of the air flow and/or the air quantity throughput is sensitively detected inside the cross-section of the line, and is fed, after translation into an item of information corresponding to the condition detected, to the condition-detecting device (4) in a data-converted manner.

7. Air mass flow regulating system according to claims 1 and 4, **characterised in that** the condition-detecting device (4) is connected to a number of sensors situated outside and close to the collecting air line (7) or the supply air line (71) and/or the individual air line (9), by means of which sensors the internal air pressure of the fuselage and/or the internal air temperature of the fuselage and/or the air quantity throughput of the air moving inside the aircraft fuselage is sensitively detected, and is fed, after translation into an item of information corresponding to the condition detected, to the condition-detecting device (4) in a data-converted manner.

8. Air mass flow regulating system according to claims 1 and 4, **characterised in that** the condition-detecting device (4) is connected to a monitoring unit (12) which is installed externally to the fuselage and relates to a pressure and temperature-sensing system realised by means of a number of sensors situated outside the aircraft fuselage, and by means of which the external air pressure of the fuselage and/or the external temperature of the fuselage and the air mass throughput of the external air flowing down the fuselage is sensitively detected and is fed, after translation into an item of information corresponding to the condition detected, to the condition-detecting device (4) in a data-converted manner.

9. Air mass flow regulating system according to claims 1 and 4, **characterised in that** the condition-detecting device (4) is connected to the flight data management of the aircraft, from which the permanently established flight altitude data is fed to the condition-detecting device (4).

10. Air mass flow regulating system according to claim 4 and one of claims 6 to 9, **characterised in that** a number of sensors, of which the individual sensor is designed as a pressure sensor or as a temperature sensor or as a flow sensor, are linked to the condition-detecting device (4), or else an individual sensor installed inside or outside the connecting line (7) or the individual air line (9) or outside the aircraft fuselage is capable of detecting, in a metrologically complex manner, the current condition of the air pressure, the air temperature and the air quantity throughput.

11. Air mass flow regulating system according to claim 1, **characterised in that** the supply air control units (51) are realised with an air quantity regulating valve or with a blower which is regulable in respect of rotational speed.

12. Air mass flow regulating system according to claim 1, **characterised in that** the monitoring units (5, 12) are realised, internally to the fuselage, with temperature and/or pressure and/or flow sensors and, externally to the fuselage, with temperature and pressure sensors, and that the monitoring device (11) is related to a flight data management unit which is a constituent part of a flight management system internal to the aircraft.

13. Air mass flow regulating system according to claim 1, **characterised in that** there is integrated into the arithmetic element (32) a calculating algorithm which calculates an air mass flow by program techniques and/or comparison techniques by means of the data of the characteristic diagram memory device (2) and the condition-detecting device (4).

14. Air mass flow regulating system according to claim 1, **characterised in that** the comparison device (31) is capable of performing a data variance comparison of the condition data with the characteristic diagram data.

15. Air mass flow regulating system according to claims 1 and 14, **characterised in that** the comparison device (31) is capable, in the outcome of the data variance comparison, of sending corresponding adjusting variables to the supply air control units (51) linked to it.

## Revendications

1. Système de contrôle d'un courant de masse d'air avec correction pour l'altitude barométrique pour un avion de transport, dans lequel au moins une conduite d'air individuelle (9), raccordée à la conduite d'air neuf (71) ainsi qu'à une conduite d'air collectrice (7), au moins un utilisateur d'air ou une sortie d'air, dont l'amenée d'air est modifiée quantitativement par plusieurs unités de commande d'air neuf (51), est dérivé(e) d'une conduite d'air neuf (71), alimentée avec de l'air conditionné par une installation climatique, d'un système de répartition d'air (6) alimenté en air par des turbomachines (8), et les unités de commande d'air neuf (51) sont connectées à une unité de régulation (1) via des lignes d'information (10), **caractérisé en ce que** l'unité de régulation (1) est équipée d'un dispositif de mémorisation de champs caractéristiques (2), d'un dispositif comparateur (31) intégré à l'unité centrale, d'une unité de calcul (32) intégrée à l'unité centrale, communiquant avec ledit dispositif comparateur et présentant un algorithme de calcul, et d'un dispositif de détection d'état (4), l'unité de calcul (32) étant reliée sur le plan informatique au dispositif de mémorisation de champs caractéristiques (2), au dispositif de détection d'état (4) et au dispositif comparateur (31) par l'intermédiaire de lignes de données internes, des données correspondantes, caractéristiques de la tenue en service des conduites d'air, des turbomachines (8) et de plusieurs unités de commande d'air neuf (51), étant stockées, de manière à pouvoir être appelées, dans une mémoire du dispositif de mémorisation de champs caractéristiques (2), et le dispositif de détection d'état (4) étant relié, via des lignes de signal (10), à plusieurs unités de surveillance (5, 12) ou dispositifs de surveillance (11) qui lui transmettent les valeurs mesurées pour l'altitude de vol et pour la pression, pour la température régnant à l'intérieur et/ou à l'extérieur du fuselage de l'avion, dans la conduite d'air collectrice (7) et/ou la (les) conduite(s) d'air neuf et/ou la (les) conduite(s) individuelle(s) (9), **en ce que**, en outre, le dispositif comparateur (31), qui effectue un échange de données permanent avec les dispositifs qui lui sont reliés, réalise un calcul de données, avec les données d'état fournies par le dispositif de détection d'état (4) et avec les données stockées dans la mémoire du dispositif de mémorisation de champs caractéristiques (2) et extraites de celle-ci, et réalise ensuite une comparaison entre les données calculées et les données d'état concernées et, si un écart entre les données comparées est déterminé, c'est-à-dire un écart des données d'état concernées par rapport aux données mémorisées, envoie des signaux de commande correspondants aux unités de commande d'air neuf (51) concernées, via les lignes d'information (10) connectées, le signal de commande correspondant amenant l'unité de commande d'air neuf (51) concernée à réguler le courant de masse d'air momentané, surveillé de manière sensitive, sur un courant de masse d'air adapté en fonction de l'altitude barométrique, en corrélation avec les données d'état de service mémorisées.

2. Système de contrôle d'un courant de masse d'air selon la revendication 1, **caractérisé en ce que** les données des caractéristiques de perte de pression de composants du système de répartition d'air et d'unités de réglage de répartition d'air, les données des caractéristiques de tenue en service de turbomachines, de conduites d'air (tuyauteries) et/ou de canalisations d'air et d'autres unités de commande d'air neuf, ainsi que les données de la courbe caractéristique de la pression d'air statique de la conduite d'air collectrice (7) sont stockées dans la mémoire du dispositif de mémorisation de champs caractéristiques (2).

3. Système de contrôle d'un courant de masse d'air selon les revendications 1 et 2, **caractérisé en ce que** les données caractéristiques de la tenue en service concernent des courbes caractéristiques et des champs caractéristiques qui sont disponibles et peuvent être appelés pour l'algorithme de calcul de l'unité de calcul (32).

4. Système de contrôle d'un courant de masse d'air selon la revendication 1, **caractérisé en ce que** le dispositif de détection d'état (4) est apte à recueillir les informations d'état, à préparer ces informations d'état, à les convertir en données et à transmettre ces informations d'état converties en données.

5. Système de contrôle d'un courant de masse d'air selon la revendication 1, **caractérisé en ce que** les informations d'état concernent au moins la pression d'air à l'intérieur des conduites et/ou la pression d'air ambiante de la conduite d'air collectrice (7) et/ou de la conduite d'air neuf (71) et/ou de la conduite d'air individuelle (9) et la pression d'air à l'intérieur du fuselage et/ou la pression d'air à l'extérieur du fuselage et la température de l'air et/ou le débit de l'air s'écoulant dans la conduite collectrice (7) et/ou la conduite d'air neuf (71) et/ou la conduite d'air individuelle (9) et/ou la température de l'air à l'intérieur du fuselage et/ou la température de l'air à l'extérieur du fuselage et l'altitude de vol (hauteur dans les environs du fuselage) de l'avion.

6. Système de contrôle d'un courant de masse d'air selon les revendications 1 et 4, **caractérisé en ce que** le dispositif de détection d'état (4) est connecté à plusieurs détecteurs, au moins un détecteur étant disposé chaque fois à l'intérieur de la section de la conduite d'air collectrice (7) et/ou de la conduite d'air neuf (71) et/ou de la conduite d'air individuelle (9), lequel détecteur permet de mesurer de manière sensitive, à l'intérieur de la section de conduite, la pression d'air intérieure de la conduite et/ou la température de l'air du flux d'air et/ou le débit d'air et, après conversion de ces mesures en une information correspondant à l'état détecté, de transmettre cette information sous forme de données au dispositif de détection d'état (4).

7. Système de contrôle d'un courant de masse d'air selon les revendications 1 et 4, **caractérisé en ce que** le dispositif de détection d'état (4) est connecté à plusieurs détecteurs qui sont disposés à l'extérieur et à proximité de la conduite d'air collectrice (7) et/ou de la conduite d'air neuf (71) et/ou de la conduite d'air individuelle (9) et qui permettent de mesurer de manière sensitive la pression d'air à l'intérieur du fuselage et/ou la température de l'air à l'intérieur du fuselage et/ou le débit de l'air se déplaçant à l'intérieur du fuselage de l'avion, et, après conversion de ces mesures en une information correspondant à l'état détecté, de transmettre cette information sous forme de données au dispositif de détection d'état (4).

8. Système de contrôle d'un courant de masse d'air selon les revendications 1 et 4, **caractérisé en ce que** le dispositif de détection d'état (4) est relié à une unité de surveillance (12) qui est installée à l'extérieur du fuselage et est constituée d'un système de détection de pression et de température, lequel est réalisé avec plusieurs détecteurs disposés à l'extérieur sur le fuselage et permet de mesurer de manière sensitive la pression de l'air à l'extérieur du fuselage et/ou la température extérieure du fuselage ainsi que le débit de l'air extérieur s'écoulant vers le bas du fuselage et, après conversion de ces mesures en une information correspondant à l'état détecté, de transmettre cette information sous forme de données au dispositif de détection d'état (4).

9. Système de contrôle d'un courant de masse d'air selon les revendications 1 et 4, **caractérisé en ce que** le dispositif de détection d'état (4) est relié au système de gestion de données de vol de l'avion qui envoie les données d'altitude de vol, déterminées en permanence, au dispositif de détection d'état (4).

10. Système de contrôle d'un courant de masse d'air selon la revendication 4 et selon une des revendications 6 à 9, **caractérisé en ce que** le dispositif de détection d'état (4) est connecté à plusieurs détecteurs, parmi lesquels chaque détecteur individuel est réalisé soit sous la forme d'un détecteur de pression, de température ou d'écoulement, soit sous la forme d'un détecteur individuel, disposé à l'intérieur ou à l'extérieur de la conduite d'air collectrice (7) ou de la conduite d'air individuelle (9) ou à l'extérieur du fuselage de l'avion et apte à détecter l'état momentané de la pression de l'air, de la température de l'air et du débit d'air à l'aide de techniques de mesure complexes.

11. Système de contrôle d'un courant de masse d'air selon la revendication 1, **caractérisé en ce que** les unités de commande d'air neuf (51) sont réalisées à l'aide d'une vanne de réglage de volume d'air ou d'une soufflante à vitesse de rotation réglable.

12. Système de contrôle d'un courant de masse d'air selon la revendication 1, **caractérisé en ce que** les unités de surveillance (5, 12) sont réalisées, à l'intérieur du fuselage, avec des détecteurs de température et/ou des détecteurs de pression et/ou des détecteurs d'écoulement et, à l'extérieur du fuselage, avec des détecteurs de température et de pression, et **en ce que** le dispositif de surveillance (11) est constitué d'une "Unité de Gestion de Données de Vol" (Flight Data Management Unit), qui fait partie d'un "Système de Gestion de Vol" (Flight Management System) interne de l'avion.

13. Système de contrôle d'un courant de masse d'air selon la revendication 1, **caractérisé en ce qu'**il est intégré à l'unité de calcul (32) un algorithme de calcul qui calcule un courant de masse d'air à l'aide de programmes et/ou d'une comparaison, en utilisant les données du dispositif de mémorisation de champs caractéristiques (2) et du dispositif de détection d'état (4).

14. Système de contrôle d'un courant de masse d'air selon la revendication 1, **caractérisé en ce que** le dispositif de comparaison (31) est apte à réaliser une comparaison des données de consigne avec les données réelles pour les données d'état et les données de champ caractéristique.

15. Système de contrôle d'un courant de masse d'air selon les revendications 1 et 14, **caractérisé en ce que**, suite au résultat de la comparaison des données de consigne avec les données réelles, le dispositif de comparaison (31) est apte à envoyer des grandeurs réglantes aux unités de commande d'air neuf (51) qui lui sont connectées.
